# EUROPEAN PATENT APPLICATION

(11) **EP 4 822 410 A1**
(43) Date of publication of application: **14.10.2026**
(21) Application number: 26165105.3
(22) Date of filing: 16.03.2026
(51) Int. Cl.: G02B 6/02

(54) **OPTICAL FIBER WITH A LOW MICRO BEND LOSS**

(30) Priority: 08.04.2025 IN 202511034354
(71) Applicant: Sterlite Technologies Limited, Gurugram, Haryana 122102 (IN)
(72) Inventor: MALVIYA, Apeksha, 122102 Gurugram (IN); BALAKRISHNAN, Janarthanan, 122102 Gurugram (IN); MUNIGE, Srinivas Reddy, 122102 Gurugram (IN); PANDEY, Anand, 122102 Gurugram (IN)
(74) Representative: Valet Patent Services Limited

(57) **Abstract**

An optical fiber cable (300) comprising a plurality of optical fibers (100, 200), with one or more core region (102) and a cladding region (108), designed to minimize micro and macro bend losses for high-performance communication systems. In particular, the optical fiber cable (300) includes a plurality of intermittently bonded optical fiber ribbons (804), each consisting of multiple parallel and adjacent optical fibers (100, 200), with bonded regions providing structural integrity. Further, each optical fiber (100, 200) within the ribbons (804) features one or more glass core regions (102) and a cladding region (108), optimized to reduce signal loss.

## Description

### TECHNICAL FIELD

Embodiments of the present disclosure relate to the field of telecommunication fiber, and more particularly, relates to an optical fiber with a low micro bend loss.

This application claims the benefit of Indian Application No. "IN202511034354" titled "OPTICAL FIBER WITH A LOW MICRO BEND LOSS" filed by the applicant on April 8, 2025, which is incorporated herein by reference in its entirety.

### Background Art

Telecommunications networks include access networks where end-user subscribers connect to service providers. With the advancement of science and technology, various modern technologies are being employed for communication purposes. One of the most important modern communication technologies is optical fiber communication technology using a variety of optical fibers.

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

Existing optical fibers face a significant trade-off between Mode Field Diameter (MFD) and micro bending loss, making them unsuitable for high-density cable applications. Optical fibers with larger MFDs often reduce splice losses, but they tend to increase micro bending loss. Especially in compact, densely packed cable configurations, the micro bending loss is a critical concern because it results in signal attenuation, which degrades the overall performance of the fiber. On the other hand, fibers with smaller MFDs may minimize micro bending loss but are more susceptible to connection loss, particularly due to non-linearity effect in fiber. This trade-off presents challenges in optimizing fibers for high-density applications where both low loss and reliability are crucial.

The growing demand for high-density cables, driven by the rise in data traffic, places additional pressure on fiber designs. Several factors, such as cable diameter, fiber count, attenuation, and micro bending losses, are vital in determining the performance of these cables. In particular, micro bending losses are especially important in high-density cables because these configurations often involve tight bends and mechanical stresses that can cause significant signal degradation. If micro bending losses are high, it leads to increased attenuation, which complicates the transmission and processing of signals. This is particularly problematic in Fiber-to-the-Home (FTTH) applications, where high splice losses and increased signal noise could disrupt performance. Therefore, achieving a balance between MFD, micro bending loss, and macro bend loss is critical for ensuring optimal performance in modem optical cable systems.

US patent applications US20190384000A1 and US11714227B2 discloses fibers with reduced micro bending loss, however, their larger MFDs make them more vulnerable to tight bending radii and mechanical stresses, leading to performance degradation in high-density cable environments. These characteristics render them unsuitable for applications where flexibility and low loss are essential, particularly when the fiber needs to maintain performance under repeated bending and physical manipulation.

Another US patent US11714227B2 discloses fibers with complex refractive index (RI) that can increase micro bending loss despite the attempt to optimize MFD. The intricate RI profile makes the fibers more sensitive to deformation and bending, further exacerbating the micro bending loss issue.

Indian patent application IN202311043713 achieves low bending loss by using a trench region adjacent to the core to create an MFD similar to G657A2-type fibers. This design may reduce bending loss, but it introduces significant limitations for long-haul transmission systems. The low MFD causes nonlinear effects, such as four-wave mixing and self-phase modulation, which result in signal degradation over long distances. These nonlinear effects limit the fiber's performance in long-haul networks where minimal signal loss and degradation are required.

Disadvantages of the currently available designs include increased micro bending losses in high-density cables or encounter limitations in long-haul applications, underscoring the difficulties in balancing various optical fiber parameters to achieve optimal performance across a wide range of applications. There is an urgent need for a technical solution that overcomes the above-stated limitations in the prior arts. Thus, the present disclosure provides an optical fiber with low micro bend loss and low macro bend loss.

### SUMMARY OF THE DISCLOSURE

Embodiments of the present disclosure relate to an optical fiber. The optical fiber comprises one or more glass core regions defined by a refractive index profile, a cladding region surrounding the one or more glass core regions, and one or more coating layers encapsulating the cladding region. The cladding region has a refractive index lower than that of the core region and comprises one or more trench regions. The optical fiber is characterized in that it has: (i) a mode field diameter in the range of 8.7 µm to 9.5 µm at a wavelength of 1310 nm; and (ii) a micro bend loss, measured using the Wire Mesh Method in IEC 62221, of less than or equal to 0.4 dB at 1550 nm.

In a first aspect, the one or more trench regions have a trench relative refractive index difference (Δt) in the range of -0.25% to -0.35%. In a second aspect, the one or more trench regions have a radial thickness in the range of 9 µm to 12 µm. In a third aspect, the optical fiber exhibits a macro bend loss of less than or equal to 0.2 dB per turn at a wavelength of 1550 nm and a bending radius of 7.5 mm. In a fourth aspect, the optical fiber exhibits a macro bend loss of less than or equal to 0.5 dB per turn at a wavelength of 1625 nm and a bending radius of 7.5 mm. In a fifth aspect, a leakage loss of the optical fiber is less than or equal to 0.001 dB/km at a wavelength of 1550 nm.

In an aspect, the one or more trench regions are characterized by a trench alpha parameter in the range of 2 to 5, such that the relative refractive index difference in the trench region varies gradually with radial distance. In a seventh aspect, the one or more glass core regions are characterized by a core alpha parameter in the range of 5 to 8. In an eighth aspect, the one or more glass core regions have a core relative refractive index difference (Δc) in the range of 0.45% to 0.6% and a core radius in the range of 4.2 µm to 5.5 µm.

In an aspect, the cladding region has an outer diameter in the range of 70 µm to 110 µm. In a tenth aspect, when the cladding region has an outer diameter in the range of 70 µm to 90 µm, it comprises a peripheral low-refractive index region such that an outermost edge of the glass cladding region is down-doped.

In an aspect, the one or more coating layers comprise a primary coating layer having a Young's modulus in the range of 0.1 MPa to 0.35 MPa and a secondary coating layer having a Young's modulus in the range of 1.1 GPa to 1.5 GPa. In a twelfth aspect, the one or more coating layers have a coating diameter in the range of 150 µm to 180 µm and a total coating thickness in the range of 12 µm to 28 µm.

In an aspect, the disclosure further encompasses an optical fiber cable comprising a plurality of such optical fibers. The disclosure also encompasses an optical fiber ribbon comprising a plurality of such optical fibers positioned parallel to one another, wherein adjacent pairs of optical fibers are bonded together at intermittent bonded regions.

In an aspect, the disclosure further relates to a method for manufacturing a glass preform for producing such an optical fiber. The method includes providing a porous core soot preform in an atmosphere containing a fluorine-containing gas and one or more carrier gases; doping the porous core soot preform with fluorine at a temperature in the range of 1050°C to 1350°C; and consolidating the doped porous core soot preform by exposing it to an inert atmosphere at a consolidation temperature in the range of 1400°C to 1600°C, thereby forming a glass core preform having a fluorine-doped region defining a trench region extending along its longitudinal length, wherein the trench region has a relative refractive index difference (Δt) in the range of - 0.25% to -0.35%.

In an aspect, the optical fiber achieves an optimized Mode Field Diameter (MFD) in conjunction with an immediate trench structure around the core region to enhance light confinement and minimize the impact of micro bending, controlled by a specific refractive index profile with optimized trench parameters. The foregoing objectives are attained by the optical fiber with a low micro bend loss as described herein.

Embodiments of the present disclosure relates to an optical fiber comprises one or more glass core regions (102) defined by a refractive index (RI) profile, a cladding region surrounding the one or more glass core regions, the cladding region having a refractive index lower than that of the core region, one or more coating layers encapsulating the cladding region, wherein the optical fiber has (i) a mode field diameter in the range of 8.7 µm to 9.5 µm at a wavelength of 1310 nm; and (ii) a micro bend loss, measured using the Wire Mesh Method in IEC 62221, in the range of 0.01 dB to 0.4 dB at 1550 nm.

According to the first aspect of the present disclosure, macro bend loss of the optical fiber is less than or equal to 0.2 decibel per turn corresponding to wavelength of 1550 nanometer at bending radius of 7.5 millimeter and a macro bend loss of the optical fiber is less than or equal to 0.5 decibel per turn corresponding to wavelength of 1625 nanometer at bending radius of 7.5 millimeter.

In accordance with an embodiment of the present disclosure, a leakage loss of the optical fiber is less than or equal to 0.001 dB/Km at 1550 nm.

According to the second aspect of the present disclosure, the cladding region comprises one or more trench regions (104) defined by a trench thickness of 9 to 12 µm and a trench depth of between -0.25% to -0.35%. In particular, trench depth is defined by the trench relative refractive index (RI) difference (Δt). Moreover, the cladding region comprises one or more trench regions, defined by a gradual variation of relative refractive index difference value in the one or more trench regions. Further, the cladding region comprises one or more trench regions directly adjacent to the one or more glass core regions without a buffer region between the one or more glass core regions and one or more trench regions.

In accordance with an embodiment of the present disclosure, the cladding region comprising one or more trench regions directly adjacent to the one or more glass core regions without a buffer region between the one or more glass core regions and one or more trench regions such that thickness of the buffer region greater than or equal to 0 and less than 1.5 µm.

According to the third aspect of the present disclosure, the cladding diameter of the optical fiber is between 70 µm to 110 µm and a coating thickness of one or more coating layers is between 40 µm to 60 µm.

Further, the cladding region, when the cladding diameter of the optical fiber is between 70 µm to 90 µm, comprises a peripheral low-refractive index (RI) region such that the outermost edge of the glass cladding region is down-doped.

In accordance with an embodiment of the present disclosure, the cladding diameter of the optical fiber is between 90 µm and 110 µm. Further, the cladding region comprises a plurality of trench regions.

According to the fourth aspect of the present disclosure, the one or more coating layers comprises, a primary coating layer defined by a primary young's modulus between 0.1 MPa to 0.35 MPa and a secondary coating layer defined by a secondary young's modulus between 1.1 GPa to 1.5 GPa.

Further, one or more coating layers has a coating diameter between 150 to 180 µm and a coating thickness in a range of 12 to 28 µm.

According to the fifth aspect of the present disclosure, the relative refractive index between trench minimum RI (N_{trenchmin}) and core maximum RI (N_{coremax}) is between 0.48% to 0.65%. The relative refractive index is represented using $\left(100∗\frac{{Ncoremax}^{2} - {Ntrenchmin}^{2}}{2 {Ncoremax}^{2}}\right) %$.

Another embodiment of the present disclosure discloses an optical fiber comprising one or more glass core regions, a glass cladding region surrounding the one or more glass core region, where cladding region comprising one or more trench regions. Further, the one or more trench regions is defined by a trench relative refractive index difference (Δt) between -0.25% to -0.35%; and one or more coating layers surrounding the glass cladding region. Furthermore, the one or more trench regions are defined by a trench thickness of 9 to 12 µm.

According to an aspect of the present disclosure, the one or more trench regions is defined by a trench alpha between 2 to 5, where a relative RI difference value in the trench region varies gradually.

According to an aspect of the present disclosure, the one or more glass core regions are defined by a core RI profile. In particular, the core RI profile is defined by a core alpha between 5 to 8. Further, the one or more glass core regions has a core relative RI difference (Δc) is in a range of 0.45% to 0.6% and a core radius between 4.2 to 5.5 µm.

In an embodiment of the disclosure, the core region has a core volume between 4 µm² to 7 µm² and the one or more trench regions has a trench volume between 15 µm² to 25 µm².

According to an aspect of the present disclosure, the optical fiber cable comprises a plurality of optical fibers. The fiber density inside the optical fiber cable is ≥ 60%. Moreover, the optical fiber comprises one or more glass core regions and a cladding region. Further, the optical fiber has (i) a mode field diameter in a range of 8.7 µm to 9.5 µm corresponding to wavelength 1310 nm, and (ii) a micro bend loss, measured by Wire Mesh Method in IEC 62221, less than or equal to 0.4 dB at 1550 nm.

According to an aspect of the present disclosure, the optical fiber cable comprises a plurality of intermittently bonded optical fiber ribbons. Each intermittently bonded optical fiber ribbon comprises a plurality of optical fibers positioned parallel and adjacent pairs of optical fibers bonded intermittently by one or more bonded regions. Moreover, the optical fiber comprises one or more glass core regions and a cladding region. Further, the optical fiber has (i) a mode field diameter in a range of 8.7 µm to 9.5 µm corresponding to wavelength 1310 nm, and (ii) a micro bend loss, measured by Wire Mesh Method in IEC 62221, less than or equal to 0.4 dB at 1550 nm.

According to an aspect of the present disclosure, the plurality of intermittently bonded optical fiber ribbons is placed inside the optical fiber cable in form a one or more bundles such that one or more intermittently bonded optical fiber ribbon in each bundle are in rolled form and grouped together by one or more binding elements. Moreover, the one or more bundles are placed substantially longitudinal straight such that the one or more bundles has a lay length of greater than or equal to 20000 mm. Further, the one or more bundles are placed in helically or SZ stranded form such that the one or more bundles has a lay length between 100 mm to 10000 mm.

In accordance with an embodiment of the present disclosure, the plurality of optical fibers has a diameter between 150 to 255 µm and the plurality of intermittently bonded optical fiber ribbons has a pitch between 150 to 255 µm.

According to an aspect of the present disclosure, the optical fiber has at least one (i) a macro bend loss of the optical fiber is less than or equal to 0.2 decibel per turn corresponding to wavelength of 1550 nanometer at bending radius of 7.5 millimeter, (ii) a macro bend loss of the optical fiber is less than or equal to 0.5 decibel per turn corresponding to wavelength of 1625 nanometer at bending radius of 7.5 millimeter, (iii) a cable cut-off wavelength of less than or equal to 1260 nm.

In an embodiment of the disclosure, a leakage loss of the optical fiber is less than or equal to 0.001 dB/Km at 1550 nm.

Yet another aspect of the disclosure relates to a method for manufacturing a glass preform for optical fibers comprising steps of providing a porous core soot preform in an atmosphere containing a fluorine-containing gas and one or more carrier gases, where the porous core soot preform having a core region and a cladding region; doping the porous core soot preform with fluorine at a temperature ranging in 1050°C to 1350°C; consolidating the doped porous soot core preform by exposing the doped porous soot core preform to an inert atmosphere at a consolidation temperature ranging from 1400° C to 1600° C, thereby forming a glass core preform having a fluorine doped region along its longitudinal length and a trench region is obtained by fluorine doping having a relative RI difference ranging from -0.25% to -0.35%; stretching the glass core preform to form one or more glass core rod; over cladding the one or more glass core rod to obtain a glass preform; and drawing the glass preform to form optical fiber.

According to the twelfth aspect of the present disclosure, the optical fiber with optimized Mode Field Diameter (MFD), immediate trench structure around the core region to enhance light confinement and minimize the impact of micro bending. Further, the optical fiber has controlled refractive index profile with optimized trench parameters.

The foregoing objectives of the present disclosure are attained by an optical fiber with a low micro bend loss.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a snapshot illustrating an optical fiber (100) in accordance with an embodiment of the present disclosure;
Fig. 2 is a snapshot illustrating an RI profile (300) of optical fiber in accordance with an embodiment of the present disclosure;
Fig. 3 is a snapshot illustrating an optical fiber (100) in accordance with an embodiment of the present disclosure;
Fig. 4 is a snapshot illustrating an RI profile (400) of optical fiber in accordance with an embodiment of the present disclosure;
Fig. 5 is a snapshot illustrating an optical fiber (100) in accordance with an embodiment of the present disclosure;
Fig. 6 is a snapshot illustrating RI profile (500) of optical fiber in accordance with an embodiment of the present disclosure;
Fig. 7 illustrates an optical fiber (100) in accordance with an embodiment of the present disclosure;
Fig. 8 is a snapshot illustrating RI profile (600) of optical fiber in accordance with an embodiment of the present disclosure;
Fig. 9 is a snapshot illustrating a multicore optical fiber (200) in accordance with an embodiment of the present disclosure;
Fig. 10 is a snapshot illustrating multicore optical fiber (200) in accordance with an embodiment of the present disclosure;
Fig. 11 is a snapshot illustrating multicore optical fiber (200) in accordance with an embodiment of the present disclosure;
Fig. 12 is a snapshot illustrating multicore optical fiber (200) in accordance with an embodiment of the present disclosure;
Fig. 13 is a snapshot illustrating multicore optical fiber (200) in accordance with an embodiment of the present disclosure;
Fig. 14 is a snapshot illustrating an optical fiber cable (800) in accordance with an embodiment of the present disclosure; and
Fig. 15 is a snapshot illustrating a flow diagram (900) for manufacturing of core rod from a porous core soot preform in accordance with an embodiment of the present disclosure.

The optical fibre cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features. Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

The term "core" herein region refers to an innermost cylindrical structure present in the center of the optical fiber, that is configured to guide the light rays inside the optical fiber. Moreover, the term cladding as used herein refers to one or more layered structure covering the core of an optical fiber from the outside, that is configured to possess a lower refractive index than the refractive index of the core to facilitate total internal reflection of light rays inside the optical fiber. Further, the cladding of the optical fiber may include an inner cladding layer coupled to the outer surface of the core of the optical fiber and an outer cladding layer coupled to the inner cladding from the outside.

In accordance with an embodiment of the present disclosure, core volume used herein is defined as a volume acquired by the core with respect to the core radius Rcore. The core volume may have a magnitude in micrometers square (µm²) that may be determined by the following $equation : = {\int }_{R 0}^{Rc} Δ \left(r\right) rdr$ wherein Rc is the radius of the core.

The term "trench volume (low RI region or inner cladding region volume)" used herein is referred to as a volume (surface integral volume) acquired by region between the core radius 'Rc' and the trench radius 'Rt' may have a trench volume with a magnitude in µm² that may be determined by the following $equation : = {\int }_{Rc}^{Rt} Δ \left(r\right) rdr$ wherein Rc is radius of core, Rt is the trench radius.

The term "up-doped" used herein is referred to as addition of doping materials to facilitate increase in the refractive index of a particular layer or part of optical fiber. The materials configured to facilitate up-doping are known as up-dopants. Specifically, the up dopant as used herein is one of Germanium and Chlorine.

The term "down-doped" used herein is referred to as addition of doping materials to facilitate decrease in the refractive index of a particular layer or part of optical fiber. The materials configured to facilitate down-doping are known as down-dopants. Specifically, at least one down dopant as used herein is Fluorine.

The term "un-doped" used herein is referred to as a material that is not intentionally doped, or which is pure silica. However, there are always chances of some diffusion of dopants in the region which is negligible.

The term "trench" as used herein is referred to as a down-doped region with a higher down-dopant concentration to decrease the refractive index of the down doped region with respect to pure silica and increase the relative refractive index of the core. Because of the trench immediate to the core region, the optical fiber can achieve very low macro bend loss because the trench confine the fundamental modes of propagation effectively and leakage loss of light is controlled.

The term "refractive index" as used herein is referred to as the measure of change of speed of light from one medium to another and is particularly measured in reference to speed of light in vacuum. More specifically, the refractive index facilitates measurement of bending of light from one medium to another medium. The cladding region has a refractive index lower than that of the core region to facilitate total internal reflection for propagation of light signals in the optical fiber.

The term "refractive index profile" of the optical fiber as used herein is referred to as a distribution of refractive indexes in the optical fiber from the core to the outermost cladding layer of the optical fiber. Based on the refractive index profile, the optical fiber may be configured as a step index fiber. The refractive index of the core of the optical fiber is constant throughout the fiber and is higher than the refractive index of the cladding. Further, the optical fiber may be configured as a graded index fiber, wherein the refractive index of the core gradually varies as a function of the radial distance from the center of the core.

The term the trench (inner cladding or low RI region) RI profile is defined as variation of relative RI in the low RI region in the radial direction from the central point of the optical fiber. The trench RI profile has a unique shape in different type of optical fiber so that the optical fiber can achieve the waveguide parameters as claimed in the present disclosure. The unique shape is defined as the variation of down dopant concentration in each region of the low RI region which can be identified by the trench curve parameter (alpha) and the trench relative RI variation with respect to radius.

The term "minimum relative RI of the inner cladding region" is defined as the lowest value of the relative RI in the low RI region which is approximately near the outer end of the low RI region (near trench radius). The minimum trench relative RI in the trench RI profile is defined at a specific radial distance from the center of the optical fiber which is termed as minimum trench radius. The radial position of minimum trench RI i.e., the minimum trench radius is important to properly confine the guided mode in the core region so that dispersion and other losses can be controlled.

The term "relative refractive index (interchangeably referred as refractive index difference)" as used herein is referred to as a measure of the relative difference in refractive index between two optical materials. As used herein, the refractive index difference is represented by Δ and its values are given in units of "%", unless otherwise specified. In some cases where the refractive index of a region is less than the average refractive index of an undoped region, the refractive index difference percentage is negative, and the region is referred to as a trench region (low RI region).

Further, the relative refractive index difference is represented by (*ni - nsilica*) *** 100 % where ni is the refractive index of different regions (core, clad trench, coating) of optical fiber where n silica is the refractive index of pure silica (1.45701 at 633 nm) and the up dopant (Germanium) concentration and down dopant (Fluorine) concentration are measured by cleaving the optical fiber silica glass base material, mirror-polishing the cleaved surface, and using an EPMA (electro probe micro-analyzer) to perform the measurement

The term "Mode Field Diameter (MFD)" as used herein is referred to as the size of the light-carrying portion of the optical fiber. For single-mode optical fibers, this region includes the optical fiber core as well as a small portion of the surrounding cladding glass of the optical fiber. The selection of desired MFD helps to describe the size of the light-carrying portion of the optical fiber. The MFD between 8.7 µm to 9.5 µm at a wavelength of 1310 nm to reduce the splice losses with the already deployed optical fibers (such as G652D fibers). The MFD centered at 9.1+0.4 µm is suitable for all kinds of applications including long haul & FTTx application as the micro bend loss is very low and it can fulfill the bend insensitive fiber application along with high MFD.

The term "cable cut-off wavelength" as used herein refers to a wavelength above which the fiber will support and propagate only the desired mode of light. If the cable cut-off value of an optical fiber is beyond the cut-off value, the optical fiber may not be compatible with typical telecommunication applications. The cabled cutoff wavelength, or "cabled cut off can be approximated by the 22 m cabled cutoff test described in EIA-455- 170 Cable Cutoff Wavelength of Single-mode Fiber by Transmitted Power, or "FOTP- 170". Cable cutoff, as used herein, means the value obtained using the approximated test.

In an embodiment of the disclosure, the bare fiber is coated with a primary coating layer (110) and a secondary coating layer (112) and/or an ink layer. The coated fiber diameter may be less than 180 µm when the glass diameter of the optical fiber is 125 µm. Further, the coating layers protects optical fiber from physical damage and abrasions and also prevents scattering losses due to micro bends. Coating layers provide mechanical protection and control the fiber's mechanical response to environmental conditions.

The term "micro bend loss" used herein is referred to as a loss in an optical fiber that relates to a light signal loss associated with lateral stresses along a length of the optical fiber. The micro bend loss is due to coupling from the optical fiber's guided fundamental mode to lossy modes or cladding modes. Generally, the micro bend loss is less than 1 dB at 1550 nm, measured by Wire Mesh Method in IEC 62221 which has been reduced as disclosed in the disclosure. The micro bend loss range is important so that the optical fiber is resistant to bend-induced signal attenuation.

The term Zero Dispersion Wavelength (ZDW) used herein is referred to as a wavelength at which the value of a dispersion coefficient is zero. In general, ZDW is the wavelength at which material dispersion and waveguide dispersion cancel one another. The ZDW is between 1300 nm to 1324 nm.

Macro bend loss used herein is referred to as the losses induced in bends around mandrels (or corners in installations), generally more at the cable level or for fibers. The macro bend loss occurs when the fiber cable is subjected to a significant amount of bending above a critical value of curvature. The macro bend loss is also called large radius loss. The macro bend loss in the claimed range ensures signal integrity under tight installation constraints.

The term "leakage loss" as used herein is referred to as loss due to mode leak in an optical fiber that adds to an attenuation of the optical fiber. The leakage loss of the optical fiber disclosed in the present disclosure is less than or equal to 0.001 dB/km. In single mode reduced diameter fiber, leakage loss is one of the important optical parameters that need to be controlled. If the leakage loss of the optical fiber is more, then the optical fiber exhibits more attenuation. The leakage loss is calculated using finite element analysis method where the losses are calculated in the fiber in straight condition. The leakage loss in high MFD range optical fiber is controlled by forming one or more trench regions in the cladding region.

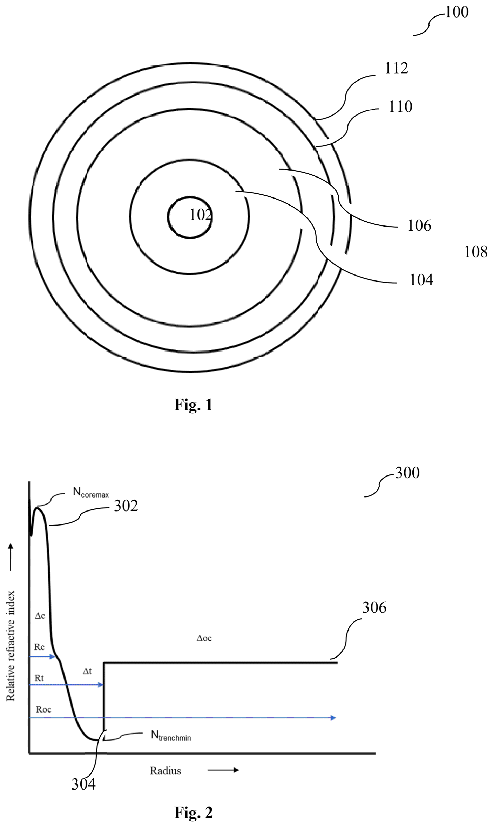

Fig. 1 illustrates an optical fiber (100) with a multi-layered structure designed to enhance light propagation and minimize signal loss during transmission. In particular. the optical fiber (100) comprises several distinct regions, starting with a core region (102) at its center, which is responsible for the primary light transmission. Surrounding the core region (100) is a first trench region (104), also referred to as the inner cladding region or inner trench region (104). Moreover, the trench region (104) helps to manage the light confinement within the core region (102) and plays a crucial role in minimizing bending losses and ensuring efficient light guidance within the optical fiber (100). Further, the outer cladding region (106) further surrounds the first trench region (104) and provides additional light confinement by offering a lower refractive index compared to the core region (102), effectively preventing light from escaping the optical fiber (100) during propagation.

In various embodiments, the cladding region (108) as a whole, which includes the first trench (104), and the outer cladding (106), serves as a protective and guiding structure that ensures the optical signal remains confined and properly directed through the optical fiber (100). Further, the outer cladding (106) is typically made from a material with a lower refractive index than the core region (102) to facilitate total internal reflection, ensuring minimal signal loss.

In accordance with an embodiment of the present disclosure, the optical fiber (100) is coated with two layers: the primary coating (110) and the secondary coating (112). In particular, the primary coating (100) surrounds the cladding region (108) and the secondary coating (112) surrounds the primary coating (110). An ink layer (i.e., a colored coating layer) may surround the secondary coating (112). Moreover, the primary coating (110) is typically designed provide cushioning and rigidity to the cladding region (108) and to protect the optical fiber (100) from damage and to reduce the stress on the core (102), while the secondary coating (112) provides additional protection, safeguarding the optical fiber (100) from physical and environmental factors that could affect its performance. Together, these primary coating (110) and secondary coating (112) ensure the durability and reliability of the optical fiber (100) in various applications, including telecommunications and data transmission systems.

Table 1 below tabulates a relationship between the cladding diameter of the optical fiber (100) and primary coating thickness, primary coating young's modulus of primary coating (110) and secondary coating thickness and secondary coating young's modulus of secondary coating (112).

**Table 1**

| Cladding diameter | Primary coating | Primary coating | Secondary coating | Secondary coating Young's |
|---|---|---|---|---|
| (2*Roc) (inµm) | thickness (in µm) | Young's modulus (in MPa) | thickness (in µm) | modulus (in MPa) |
| 70 to 90 | 15 to 25 | 0.2 to 0.4 | 15 to 25 | 900 to 1200 |
| 70 to 90 | 15 to 25 | 0.1 to 0.2 | 15 to 25 | 1200 to 1500 |
| 90 to 110 | 10 to 20 | 0.1 to 0.35 | 10 to 20 | 900 to 1200 |
| 90 to 110 | 10 to 20 | 0.2 to 0.55 | 10 to 20 | 900 to 1200 |
| 110 to 125 | 4 to 20 | 0.1 to 0.2 | 4 to 20 | 1200 to 1500 |
| 110 to 125 | 4 to 20 | 0.2 to 0.45 | 4 to 20 | 1200 to 1500 |

Further, Table 1, outlines the structural and mechanical properties of optical fibers, focusing on the glass cladding diameter and the thickness and Young's modulus of the primary and secondary coatings. In particular, the glass cladding diameter ranges from 70 to 125 µm, while the coating thicknesses vary from 4 to 25 µm. Further, the primary coating has a low Young's modulus i.e., 0.1 to 0.4 MPa for flexibility, while the secondary coating offers higher stiffness i.e., 900 to 1500 MPa for added mechanical protection. These parameters ensure that the fiber is durable, flexible, and resistant to environmental stress. Therefore, making them suitable for various applications.

Fig. 2 illustrates the RI profile (300) of the optical fiber (100) transitions from the core region (102) via the first trench region (104) to the outer cladding region (106). In particular, the core region (102) is defined by a core RI profile (302) having a core radius (Rc), a core relative RI difference (Δc) and a core alpha. Moreover, the core RI profile (302) has a maximum core refractive index (N_{coremax}). The core radius (Rc) is between 4.2µm to 5.5 µm, the core relative RI difference (Δc) is 0.45% to 0.6% and the core alpha is between 5 to 8.

Further, the trench region (104) is defined by a trench RI profile (304) having a trench radius (Rt), a trench relative RI difference (Δt) and a trench alpha. The trench RI profile (302) has a minimum trench refractive index (N_{trenchmin}). The trench radius (Rt) is between 15 µm to 17µm, the trench relative RI difference (Δt) is -0.25% to -0.35% and the trench alpha is between2 to 5.

In accordance with an embodiment of the present disclosure, the trench region (304) is defined by a trench thickness i.e., Rt - Rc. Particularly, the trench alpha is between 2.5 to 3.5. Moreover, the outer cladding region (106) is defined by an outer cladding RI profile (306) where the outer cladding region (106) is pure silica (undoped). The outer cladding region (106) has an outer cladding radius (Roc) between 55 µm to 62.5 µm and an outer cladding relative RI difference (Δoc) is between -0.01% to 0.01%. Preferably, the outer cladding relative RI difference (Δoc) is zero.

In accordance with an embodiment of the present disclosure, the core relative RI difference 'Δt' can be determined as: Δc= (n_{c} - n_{silica}) *100 (%), where n_{c} is the refractive index of the core region and n_{silica} is the refractive index of pure silica. The trench relative RI difference 'Δt' can be determined as: Δt= (nₜ - n_{silica}) *100 (%), where nₜ is the refractive index of the one or more trench region and n_{silica} is the refractive index of pure silica. Similarly, the outer cladding relative RI difference (Δoc) is calculated.

In accordance with an embodiment of the present disclosure, one or more coating layers (110, 112) encapsulate the cladding region (108). The optical fiber (100) has a mode field diameter (MFD) in the range of 8.7 µm to 9.5 µm at a wavelength of 1310 nm and a micro bend loss, measured using the Wire Mesh Method in IEC 62221, is less than or equal to 0.4 dB at 1550 nm.

In another embodiment of the disclosure, the micro bend loss of the optical fiber (100) is in the range of 0.1 dB to 0.4 dB at 1550 nm.

In yet another embodiment of the disclosure, the micro bend loss of the optical fiber (100) is in the range of 0.2 dB to 0.38 dB at 1550 nm.

In accordance with an embodiment of the present disclosure, the optical fiber (100) has a Zero Dispersion Wavelength (ZDW) of less than or equal to 1330 nm, and a cable cut-off wavelength of less than or equal to 1260 nm.

In accordance with an embodiment of the present disclosure, the one or more trench regions is defined by a trench alpha between 2 to 5, and relative RI difference value in the trench region varies gradually. In particular, the trench alpha ensures the required variation of RI in the trench region of the optical fiber to achieve the bend insensitivity of the optical fiber. The intermediate point or a small region having thickness less than 1 micron where the RI profile of the optical fiber transitions from an up doped region (high RI region with reference to pure silica) to a down doped region (low RI region with reference to pure silica) is called the core to clad transition point. Further, the core to clad transition point can be identified from the RI profile of the optical fiber where relative RI is approximately equal to zero.

In accordance with an embodiment of the present disclosure, one or more glass core regions are defined by core RI profile. The core RI profile is defined by a core alpha between 5 to 8. Moreover, the core region has a core relative RI difference (Δc) in a range of 0.45% to 0.6% and a core radius between 4.5 to 5.5 µm. Further, the core region has a core volume between 4 µm²to 7 µm² and the one or more trench regions has a trench volume between 15 µm² to 25 µm². The combination of core relative RI difference, core alpha and core radius is required to achieve the MFD range and cable cut-off of the optical fiber. The optical fiber may exhibit higher bend loss and lower MFD when the core volume and trench volume are out of the claimed range. Table 2 tabulates example embodiments of the optical fiber (100) having the inner trench region (104), when the glass diameter of the optical fiber (100) is 110 to 125 µm.

**Table 2**

| Parameters | Example 1 | Example 2 | Example 3 | Range |
|---|---|---|---|---|
| Core radius (Rc) (µm) | 5.3 | 5.12 | 5.1 | 4.5 to 5.5 |
| Core relative RI difference (Δc) (%) | 0.54 | 0.56 | 0.58 | 0.5 to 0.6 |
| Inner cladding (trench) radius (Rt) (µm) | 15.2 | 16.4 | 16.8 | 15 to 17 |
| Inner cladding relative RI difference (Δt) (%) | -0.25 | -0.27 | -0.3 | -0.25 to -0.35 |
| Outer cladding radius (Roc) (µm) | 62.5 | 62.5 | 62.5 | 55 to 62.5 |
| Mode Field Diameter (MFD) (µm) | 9.12 | 9.02 | 8.94 | 8.7 to 9.5 |
| Cable cutoff wavelength(CC) (nm) | 1216 | 1245 | 1236 | ≤ 1260 |
| Zero Dispersion Wavelength (ZDW) (nm) | 1308 | 1310 | 1312 | ≤ 1330 |
| Macro bend loss at bending radius 7.5mm and wavelength 1550nm (dB/turn) | 0.155 | 0.046 | 0.12 | ≤ 0.2 |
| Macro bend loss at bending radius 7.5mm and wavelength 1625nm (dB/turn) | 0.407 | 0.199 | 0.32 | ≤ 0.5 |
| Macro bend loss at bending radius 10mm and wavelength 1550nm (dB/turn) | 0.07 | 0.017 | 0.05 | < 0.05 |
| Macro bend loss | 0.169 | 0.072 | 0.14 | < 0.15 |
| at bending radius 10mm and wavelength 1625nm (dB/turn) | | | | |
| Micro bend loss at 1550 nm (dB/Km) | 0.34 | 0.4 | 0.38 | ≤ 0.4 |

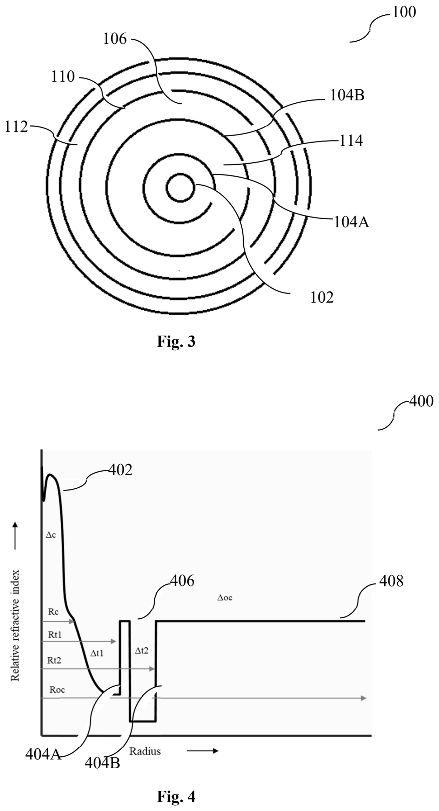

Fig. 3. illustrates optical fiber (100) having a core region (102) surrounded by a first trench region (104A). The first trench region (104A) increases the relative refractive index of the core as it is a down doped region. In particular, the second trench region (104B) surrounding the first trench region (104A). Moreover, the second trench region (104B) is separated by a pure silica cladding (114) present between the first trench region (104A) and the second trench region (104B). The second trench region (104B) has a low refractive index. Further, outer cladding region (106) surrounds the second trench region (104B).

In accordance with an embodiment of the present disclosure, the optical fiber (100) further includes coating layers (110, 112). A primary coating (110) covering the outer cladding region (106) and the secondary coating (112) is placed outside of the primary coating (110). Together, the coatings (110, 112) prevent scattering losses due to micro bends and protect the glass region of the optical fiber (100).

Fig. 4 illustrates an alternative RI profile (400) of the optical fiber (100) of Fig. 3. The RI profile (400) features a design with a first trench region (404A) adjacent to the core region (402), and a second trench region (404B). A pure silica buffer cladding (406) may or may not be present between the first trench region (404A) (hereinafter interchangeably referred as inner trench) and the second trench region (404B) (hereinafter interchangeably referred as mid trench). In particular, the pure silica region (406), when present, helps manage the refractive index (RI) profile between the first trench region (404A) and the second trench region (404B), creating a smoother transition.

In accordance with an embodiment of the present disclosure, an outer cladding region (408) surrounding the second trench region (404B). This design of the RI profile (400) reduces bending losses by ensuring that light remains confined within the core region (402), especially when the optical fiber (100) is bent.

When the optical fiber's diameter ranges between 110 µm to 125 µm, the presence of these trench regions significantly enhances its performance. The inner trench (404A) and mid-trench (404B) work together to minimize both macro bend and micro bend losses. The buffer region (410), if included, further improves this by balancing the refractive index difference, ensuring that the optical fiber remains efficient even during tight bends, leading to reduced signal loss. The result is a more robust optical fiber (100), with improved bending performance and lower attenuation in bend-sensitive applications.

In accordance with an embodiment of the present disclosure, the core region (402) may have a core radius (Rc) between 4.5 µm to 5.5 µm and a core relative RI difference (Δc) between 0.45% to 0.6% and a core alpha between 5 to 8.

In accordance with an embodiment of the present disclosure, the first trench region (404A) may have a first trench radius (Rt1) between 14 µm to 16 µm, a first trench relative RI difference (Δt1) between -0.25% to -0.35%.

In accordance with an embodiment of the present disclosure, the second trench region (404B) may have a second trench radius (Rt2) between 20 µm to 23 µm, a second trench relative RI difference (Δt2) between -0.4% to -0. 5%. The outer cladding region (408) has an outer cladding radius (Roc) between 55 µm to 62.5 µm and an outer cladding relative RI difference (Δoc) is between -0.01% to 0.01%. Preferably, the outer cladding relative RI difference (Δoc) is zero.

Further, the pure silica region (406) may have a relative RI difference between -0.01% to 0.01%. Preferably, the relative RI difference of the pure silica region (406) is zero.

In accordance with an embodiment of the present disclosure, a macro bend loss of the optical fiber (100) is less than or equal to 0.5 decibel per turn corresponding to wavelength of 1550 nanometer at bending radius of 7.5 millimeter.

Alternatively, a macro bend loss of the optical fiber (100) is less than or equal to 0.3 decibel per turn corresponding to wavelength of 1625 nanometer at bending radius of 7.5 millimeter. The macro bend loss in the claimed range ensures signal integrity under tight installation constraints.

In accordance with an embodiment of the present disclosure, the leakage loss of the optical fiber (100) is less than or equal to 0.001 dB/Km at 1550 nm. In single mode reduced diameter fiber, leakage loss is one of the important optical parameters that need to be controlled. If the leakage loss of the optical fiber is more, then the optical fiber exhibits more attenuation. Low leakage loss maintains signal strength over extended distances.

In accordance with an embodiment of the present disclosure, the optical fiber (100) has a mode field diameter (MFD) in the range of 8.7 µm to 9.5 µm at a wavelength of 1310 nm and a micro bend loss, measured using the Wire Mesh Method in IEC 62221, is less than or equal to 0.4 dB/Km at 1550 nm.

In another embodiment of the disclosure, the micro bend loss of the optical fiber (100) is in the range of 0.1 dB to 0.4 dB at 1550 nm.

In yet another embodiment of the disclosure, the micro bend loss of the optical fiber (100) is in the range of 0.2 dB to 0.38 dB at 1550 nm. Further, the optical fiber (100) has a Zero Dispersion Wavelength (ZDW) of less than or equal to 1330 nm, and a cable cut-off wavelength of less than or equal to 1260 nm.

Table 3 tabulates exemplary embodiments of optical fiber (100) of Fig. 3 having inner trench (104A) and mid trench (104B), when glass diameter is between 110 to 125µm.

**Table 3**

| Parameters | Example 1 | Example 2 | Range |
|---|---|---|---|
| Core radius (Rc) (µm) | 5.15 | 5.32 | 4.5 to 5.5 |
| Core relative RI difference (Δc) (%) | 0.52 | 0.52 | 0.5 to 0.6 |
| Inner trench radius (Rt1) (µm) | 14.5 | 14.5 | 14 to 16 |
| Inner trench relative RI difference (Δt1) (%) | -0.26 | -0.26 | -0.25 to -0.35 |
| Mid trench radius (Rt2) (µm) | 22 | 20 | 20 to 23 |
| Mid relative RI difference (Δt2) (%) | -0.4 | -0.45 | -0.4 to -0.5 |
| Outer cladding radius (Roc) (µm) | 62.5 | 62.5 | 55 to 62.5 |
| Mode Field Diameter (MFD) (µm) | 9.02 | 9.31 | 8.7 to 9.5 |
| Cable cutoff wavelength (CC) (nm) | 1215 | 1232 | ≤ 1260 |
| Zero Dispersion Wavelength (ZDW) (nm) | 1311 | 1309 | ≤ 1330 |
| Macro bend loss at bending radius 7.5mm and wavelength 1550nm (dB/turn) | 0.02 | 0.04 | ≤ 0.2 |
| Macro bend loss at bending radius 7.5mm and wavelength 1625nm (dB/turn) | 0.13 | 0.11 | ≤ 0.5 |
| Macro bend loss at bending radius 10mm and wavelength 1550nm (dB/turn) | 0.01 | 0.01 | ≤ 0.05 |
| Macro bend loss at bending radius 10mm and wavelength 1625nm (dB/turn) | 0.04 | 0.03 | ≤ 0.15 |
| Micro bending loss (dB/Km) | ≤ 0.4 | ≤ 0.4 | ≤ 0.4 |

In accordance with an embodiment of the present disclosure, the cladding region comprises one or more trench regions defined by a trench thickness of 9 to 12 µm and a trench depth of between -0.25% to -0.35%. The trench depth is defined in terms of a trench relative refractive index difference value. Further, the trench depth in the claimed range improves light confinement and reduces signal loss due to very low micro bends or external stress.

The cladding diameter of the optical fiber is between 70 µm to 110 µm and a coating thickness of one or more coating layers is between 40 µm to 60 µm. The claimed range of the cladding diameter and the coating thickness optimizes the fiber's resistance to external stresses while enabling reduction of fiber diameter by reducing coating thickness and / or by reducing cladding diameter.

In accordance with an embodiment of the present disclosure, the outer cladding region (106) has the cladding diameter between 70 µm and 90 µm. In particular, the outer cladding region (106) comprises a peripheral low-refractive index (RI) region such that the outermost edge of the glass cladding region is down-doped. In the reduced diameter fiber, the outer region of the glass cladding is doped with down dopant to enhance performance of the optical fiber (100) in high stress or low radius bend applications.

In accordance with an embodiment of the present disclosure, the one or more coating layers comprising, a primary coating layer (110) has a primary young's modulus between 0.1 MPa to 0.35 MPa and a secondary coating layer (112) has a secondary young's modulus between 1.1 to 1.5 GPa. The primary coating layer (110) acts as a cushioning and improves structural integrity for the secondary coating layer (112). To further reduce the micro bending loss of less than 0.4 dB at 1550 nm, the RI profile design of the optical fiber (100) along with the primary and secondary coating parameters play an important role. Further, the one or more coating layers has a coating diameter between 150 to 180 µm and a coating thickness in a range of 12 to 28 µm. The glass diameter of the outer cladding region (106) remains about 125 µm and the coating thickness is optimized in such a way to optimize mechanical protection for reduced diameter coated optical fiber.

In accordance with an embodiment of the present disclosure, relative refractive index between trench minimum RI (N_{trenchmin}) and core maximum RI (N_{coremax}) is between 0.48% to 0.65%, where the relative refractive index is represented using $\left(100∗\frac{{Ncoremax}^{2} - {Ntrenchmin}^{2}}{2 {Ncoremax}^{2}}\right) %$ .

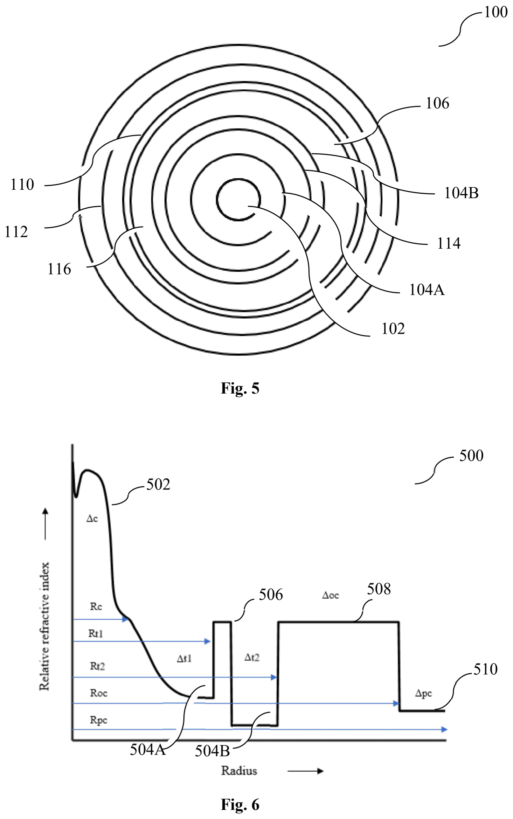

Fig. 5 illustrates an optical fiber (100) that comprises a core region (102), the first trench region (inner cladding region) (104A), the second trench region (mid cladding region) (104B), the outer cladding region (106), the primary coating (110), the secondary coating (112), a pure silica cladding (114) and a peripheral down doped region (116). There is the pure silica region (114) between the first trench region (104A) and the second trench region (104B) i.e. at the transition point is negligible. Moreover, the optical fiber (100) includes the second trench region (104B), often referred to as the mid cladding region (104B), which plays an important role in optimizing the optical fiber's bending performance by minimizing signal loss, particularly during tight bends. Further, the outer cladding region (106) serves to ensure that light remains confined within the core and cladding structure via total internal reflection.

In accordance with an embodiment of the present disclosure, the optical fiber (100) also has an outer protective coating that includes the primary coating (110) and secondary coating (112), which help to protect the inner components of the optical fiber (100) from physical damage and environmental factors. Additionally, a pure silica clad may be present between the core region (102) and the trench region (104A). This pure silica region provides a transition zone with minimal refractive index difference, ensuring smooth light guidance from the core to the cladding. The transition between these regions is designed to be negligible, preventing significant light leakage or scattering as the light moves through different parts of the fiber.

Further, the inclusion of a peripheral down-doped region (116) fine-tunes the refractive index profile of the optical fiber (100), which improves the optical fiber's performance under different conditions. Overall, this detailed structure of the optical fiber (100) is optimized to reduce bend losses and improve signal integrity, providing a high level of performance for a variety of applications.

In accordance with an embodiment of the present disclosure, the peripheral cladding layer (116) (i.e., the peripheral trench region) refers to as the outermost cladding region of the optical fiber (100). In a reduced diameter fiber, the thickness of the outer cladding is less so it is down doped with Fluorine till the end of the glass region of the optical fiber to significantly improve leakage loss and micro bending loss. Further, the down doping in the periphery of the outer cladding layer helps in increasing the mechanical strength of the optical fiber (100).

In accordance with an embodiment of the present disclosure, the optical fiber (100) structure offers significant improvements in macro bend and microbend losses. The inner trench (104A) near the core (102), the mid-trench (104B) in the cladding (108), and the peripheral trench (116) all play a role in managing how light behaves during bending. These trenches help to maintain the light's confinement within the core, reducing the amount of light that escapes during bends. Specifically, macro bends, which involve larger curvature of the optical fiber (100), and micro bends, which occur due to small-scale deformations or imperfections in the fiber (100), are less likely to cause light leakage or signal loss due to the careful control of the refractive index profile.

In accordance with an embodiment of the present disclosure, the peripheral trench (116) at the outer periphery of the cladding further ensures that light remains confined, especially during tight bends. Because there is no pure silica or undoped region beyond this peripheral trench (116), the structure ensures that the refractive index difference is maintained throughout the cladding, which reduces any potential for leakage at the outer boundaries of the optical fiber (100).

Fig. 6 illustrates an alternative RI profile (500) of the optical fiber (100) of Fig. 5. The RI profile (500)transitions from the core region (102) via the first trench region (104A), the second trench region (104B), the outer cladding region (106) to the peripheral cladding. In particular, the core region (102) is defined by a core RI profile (502) having a core radius (Rc), a core relative RI difference (Δc) and a core alpha. The core radius (Rc) is between 4.2µm to 5.5 µm, the core relative RI difference (Δc) is 0.5% to 0.6% and the core alpha is between 5to 8. Moreover, the first trench region (104) is defined by a first trench RI profile (504A) having a first trench radius (Rt1), a first trench relative RI difference (Δt1) and a first trench alpha.

In accordance with an embodiment of the present disclosure, the first trench radius (Rt1) is between 14 µm to 16µm, the first trench relative RI difference (Δt1) is between -0.25% to - 0.35% and the first trench alpha is between 2 to 5. The first trench region (504) is defined by a first trench thickness i.e., Rt1 - Rc.

In accordance with an embodiment of the present disclosure, the second trench region (104B) is defined by a second trench RI profile (504B) having a second trench radius (Rt2), a second trench relative RI difference (Δt2) and a second trench alpha. The second trench alpha is always greater than the first trench alpha which ensures low micro bend loss. Specifically, the second trench alpha is greater than 3.5 and less than 5.5. Further, the second trench radius (Rt2) is between 20 µm to 23µm, the second trench relative RI difference (Δt2) is between -0.4% to - 0.5%.

In accordance with an embodiment of the present disclosure, the outer cladding region (106) is defined by an outer cladding RI profile (508) where the outer cladding region (106) is pure silica (undoped). Further, the outer cladding region (106) has an outer cladding radius (Roc) between 55 µm to 62.5 µm and an outer cladding relative RI difference (Δoc) is between -0.01% to 0.01%. Preferably, the outer cladding relative RI difference (Δoc) is zero. The peripheral trench region (116) is defined by a peripheral trench RI profile (510). The peripheral trench region (116) has a peripheral trench radius (Rpc) and a peripheral relative RI difference (Δpc).

In accordance with an embodiment of the present disclosure, the core relative RI difference 'Δc' can be determined as: Δc= (n_{c} - n_{silica}) *100 (%), where n_{c} is the refractive index of the core region (102) and n_{silica} is the refractive index of pure silica. The trench relative RI difference 'Δt' can be determined as: Δt= (nₜ - n_{silica}) *100 (%), where nₜ is the refractive index of the one or more trench region (104) and n_{silica} is the refractive index of pure silica. Similarly, the outer cladding relative RI difference (Δoc) is calculated.

In accordance with an embodiment of the present disclosure, one or more coating layers (110, 112) encapsulate the cladding region (108). In particular, the optical fiber (100) has a mode field diameter (MFD) in the range of 8.7 µm to 9.5 µm at a wavelength of 1310 nm and a leakage loss is less than or equal to 0.001dB/Km.

In another embodiment of the disclosure, the micro bend loss of the optical fiber (100) is in the range of 0.04 dB to 0.4 dB at 1550 nm.

In yet another embodiment of the disclosure, the micro bend loss of the optical fiber (100) is in the range of 0.1dB to 0.4 dB at 1625 nm.

In accordance with an embodiment of the present disclosure, the optical fiber (100) has a Zero Dispersion Wavelength (ZDW) of less than or equal to 1330 nm, and a cable cut-off wavelength of less than or equal to 1260 nm.

Table 4 tabulates the exemplary embodiment of the optical fiber (100) having a first trench (104A), a second trench (104B) and a peripheral trench, when glass diameter is 70 to 90µm.

**Table 4**

| Parameters | Example 1 | Example 2 | Example 3 | Ranges |
|---|---|---|---|---|
| Core radius (Rc) (µm) | 5.3 | 5.3 | 5.15 | 4.5 to 5.5 |
| Core relative RI difference (Δc) (%) | 0.54 | 0.54 | 0.52 | 0.5 to 0.6 |
| first trench radius (Rt1) (µm) | 15.2 | 15.2 | 14.5 | 14 to 16 |
| first trench relative RI difference (Δt1) (%) | -0.25 | -0.25 | -0.26 | -0.24 to -0.3 |
| Second trench radius (Rt2) (µm) | - | 22 | - | 20 to 23 |
| Second trench relative RI difference (Δt2) (%) | NA | -0.4 | NA | -0.3 to -0.5 |
| Outer cladding radius (Roc) (µm) | 35 | 30 | 39 | 30 to 40 |
| Peripheral cladding relative RI difference (Δpc) (%) | -0.4 | -0.4 | -0.45 | -0.4 to -0.5 |
| Peripheral cladding radius (Rpc) (µm) | 40 | 35 | 45 | 35 to 45 |
| Mode Field Diameter (MFD) (µm) | 9.12 | 9.12 | 9.02 | 8.7 to 9.5 |
| Cable cutoff wavelength (CC) (nm) | 1224 | 1224 | 1220 | ≤ 1260 |
| Zero Dispersion Wavelength (ZDW) | 1308 | 1308 | 1311 | ≤ 1330 |
| Macro bend loss at bending radius 7.5mm and wavelength 1550nm (dB/turn) | 0.17 | 0.0.8 | 0.5 | ≤ 0.2 |
| Macro bend loss | 0.45 | 0.18 | 0.14 | ≤ 0.5 |
| at bending radius 7.5mm and wavelength 1625nm (dB/turn) | | | | |
| Macro bend loss at bending radius 10mm and wavelength 1550nm (dB/turn) | 0.09 | 0.03 | 0.03 | ≤ 0.05 |
| Macro bend loss at bending radius 10mm and wavelength 1625nm (dB/turn) | 0.18 | 0.08 | 0.03 | ≤0.15 |
| Leakage loss (dB/Km) | <0.001 | <0.001 | <0.001 | ≤0.001 |

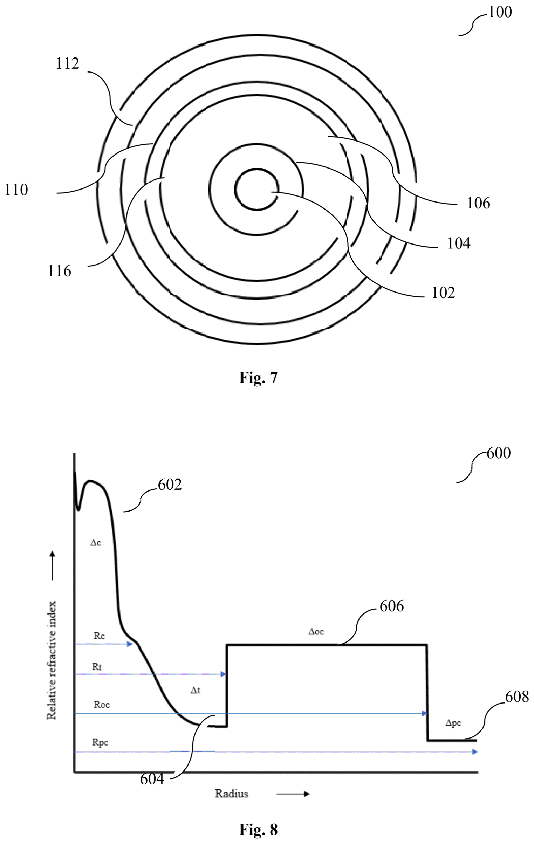

Fig. 7 illustrates an optical fiber (100). In particular, the optical fiber (100) comprises the core region (102), the first trench region (inner cladding region) (104) surrounding the core region (102), the outer cladding region (106) surrounding the first trench region and the peripheral down doped region (116) is present on the outer periphery of the cladding region. Further, the primary coating (110) surrounds the peripheral cladding region (116), and the secondary coating (112) surrounds the primary coating (110).

Fig. 8 illustrates the RI profile (600) of the optical fiber (100)as described in Fig. 7. The glass diameter of the optical fiber (100) is between 90 to 110 µm. In particular, the optical fiber (100) features an inner trench adjacent to the core and a peripheral trench in the cladding. The peripheral trench is located at the outer periphery of the glass portion of the cladding, and beyond this trench, there is no pure silica or undoped region in the glass portion of the optical fiber (100). Moreover, the thickness of the peripheral trench is specified to be between 3 to 7 µm, adding further precision to the fiber's structural characteristics.

Further, the optical fiber (100) introduces down doping in the periphery of the glass portion. Down doping is the process of adding specific dopants to the peripheral regions of the cladding to modify its properties. This doping helps increase the strength of the glass fiber by altering its refractive index and improving its resistance to mechanical stresses. The increased strength is beneficial for the fiber, especially in applications where the fiber might be subjected to physical strain or external pressure.

Moreover, down doping in the periphery also helps to decrease the leakage loss of the optical fiber. By carefully modifying the refractive index of the cladding through down doping, the fiber ensures better light confinement, reducing the likelihood of light escaping from the core during bending or stretching. This reduction in leakage loss is particularly important in fibers that need to maintain signal integrity under various environmental and operational conditions.

In accordance with an embodiment of the present disclosure, the peripheral trench, with its thickness of 3 to 7 µm, also contributes to controlling the refractive index profile at the outer cladding regions, ensuring that light is effectively confined within the core even when the fiber is bent or subjected to stress. This, combined with the down doping, enhances the overall performance of the fiber, reducing signal degradation and increasing the durability of the fiber in harsh environments.

In accordance with an embodiment of the present disclosure, the RI profile (600) of the optical fiber (100) transitions from the core region (102) via the first trench region (104) to the outer cladding region (106). The core region (102) is defined by a core RI profile (602) having a core radius (Rc), a core relative RI difference (Δc) and a core alpha.. The core radius (Rc) is between 4.2 µm to 5.5 µm, the core relative RI difference (Δc) is 0.5% to 0.6% and the core alpha is between 5 to 8.

In accordance with an embodiment of the present disclosure, the trench region (104) is defined by a trench RI profile (604) having a trench radius (Rt), a trench relative RI difference (Δt) and a trench alpha. The trench radius (Rt) is between 14 µm to 17 µm, the trench relative RI difference (Δt) is between -0.25% to -0.32% and the trench alpha is between 2to 5. The trench region (604) is defined by a trench thickness i.e., Rt - Rc.

In accordance with an embodiment of the present disclosure, the outer cladding region (106) is defined by an outer cladding RI profile (606) where the outer cladding region (106) is pure silica (undoped). The outer cladding region (106) has an outer cladding radius (Roc) between 38µm to 52µm. The peripheral cladding region (116) has a peripheral cladding radius (Rpc) is between 45µm to 55µmand a peripheral cladding relative RI difference (Δpc) is between -0.3% to -0.5%.

Table 5 tabulates an exemplary embodiment of the optical fiber (100) having the first trench region (104), and a peripheral trench region (116), when glass diameter is 90 to 110 µm.

**Table 5**

| Parameters | Example 1 | Example 2 | Example 3 | Ranges |
|---|---|---|---|---|
| core radius (Rc) (µm) | 5.15 | 5.1 | 5.12 | 4.5 to 5.5 |
| core relative RI difference (Δc) (%) | 0.52 | 0.58 | 0.56 | 0.5 to 0.6 |
| first trench radius (Rt) (µm) | 14.5 | 16.8 | 16.4 | 14 to 17 |
| first trench relative RI difference (Δt) (%) | -0.26 | -0.3 | -0.27 | -0.25 to -0.32 |
| outer cladding radius (Roc) (µm) | 39 | 46 | 51 | 38 to 52 |
| Peripheral cladding relative RI difference (Δpc) (%) | -0.45 | -0.45 | -0.35 | -0.3 to -0.5 |
| Peripheral cladding radius (Rpc) (µm) | 45 | 50 | 55 | 45 to 55 |
| Mode field diameter (MFD) (µm) | 9.02 | 8.94 | 9.02 | 8.7 to 9.5 |
| Cable cutoff wavelength(CC) (nm) | 1220 | 1240 | 1245 | ≤ 1260 |
| Zero Dispersion Wavelength (ZDW) (nm) | 1311 | 1312 | 1310 | ≤ 1330 |
| Macro bend loss at bending radius 7.5mm and wavelength 1550nm (dB/turn) | 0.5 | 0.11 | 0.03 | ≤ 0.5 |
| Macro bend loss at bending radius 7.5mm and wavelength 1625nm (dB/turn) | 0.14 | 0.29 | 0.18 | ≤ 0.3 |
| Macro bend loss at bending radius 10mm and wavelength 1550nm (dB/turn) | 0.03 | 0.04 | 0.014 | ≤ 0.05 |
| Macro bend loss at bending radius 7.5mm and wavelength 1625nm (dB/turn) | 0.09 | 0.12 | 0.06 | ≤ 0.15 |
| Leakage loss (dB/km) | <0.001 | <0.001 | <0.001 | ≤0.001 |

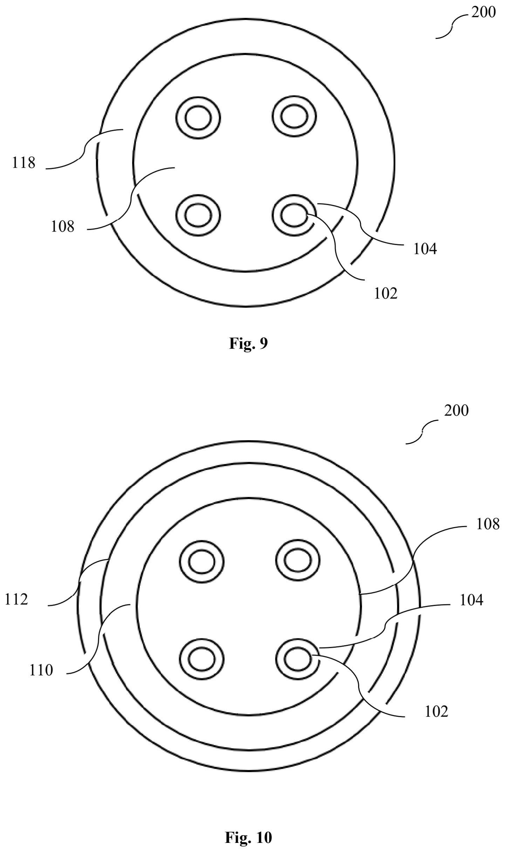

Fig. 9 illustrates a multicore optical fiber (200). In particular, the multicore optical fiber (200) comprises a plurality of core region (102), a first trench region (inner cladding region) (104) surrounding each core region of the plurality of core region (102), a cladding region (108) and a single coating layer (118). Moreover, the first trench region (104) helps to guide the light within the core regions (102) and maintain the fiber's efficiency by reducing signal loss and promoting effective light confinement. Further, the core region (102) is then enclosed by a cladding region (108), which typically has a lower refractive index than the core region (102), ensuring that light stays confined through total internal reflection.

In accordance with an embodiment of the present disclosure, the multicore optical fiber (200) comprises a single coating layer (118), which serves the functions of both the primary coating and secondary coating. In particular, the single coating layer (118) provides protective properties, safeguarding the glass region of the optical fiber (200) from mechanical damage, environmental factors, and external stresses. It might also include an ink layer for identification or protection purposes, simplifying the fiber's manufacturing and handling process while ensuring that it remains durable in practical applications.

Further, the single coating layer (118) not only reduces complexity but also ensures that the multicore optical fiber (200) retains its structural integrity while maintaining the optical performance. It serves to protect the multicore optical fiber (200) during installation and in use, ensuring that bending, stretching, and other mechanical stresses do not adversely affect the multicore optical fiber's ability to transmit light efficiently. In the multicore optical fiber (200), one or more core regions (102) can be arranged, each with its own trench region (inner cladding) (104), allowing the multicore optical fiber (200) to support multiple independent channels for light transmission. This type of multicore optical fiber (200) is especially useful in applications where space-saving and multiple data transmission paths are needed, such as in telecommunications, medical imaging, or high-capacity data networks.

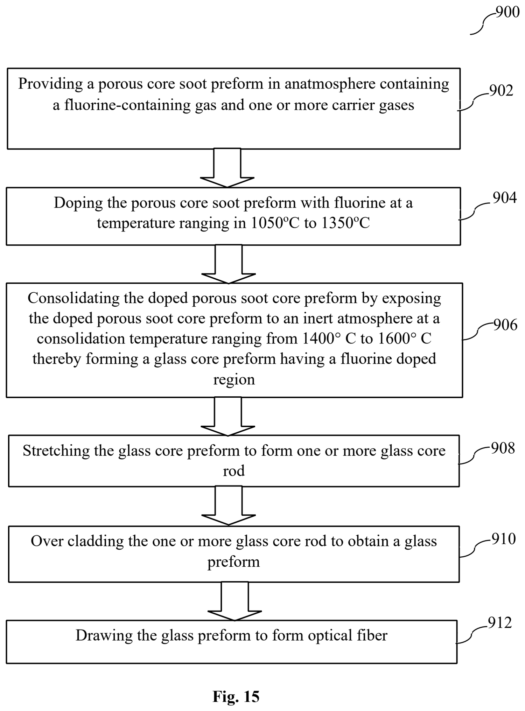

In accordance with an embodiment of the present disclosure, the multi-core optical fibre (200) is manufactured using a multicore fibre preform as per the steps explained later in Fig. 15. In particular, the multicore fiber preform is obtained from a preform assembly that includes a plurality of core rods, a marker rod (optional), a solid glass tube having plurality of core holes, and a marker hole (optional) along the longitudinal length of the solid glass tube. Moreover, the glass tube may be made of pure silica glass (act as cladding) or the glass tube may have one or more trench regions as well. The method to obtain a preform assembly includes insertion of a plurality of core rods as disclosed in the present disclosure in the plurality of core holes and any type of marker rod known in the art inside the marker hole. Further, the method includes a step of either collapsing or simultaneous collapsing and stretching of the stacked assembly to manufacture the multicore fibre preform. Furthermore, the method includes a step of cone formation at one end of the multicore fibre preform.

In accordance with an embodiment of the present disclosure, the multicore fiber (200) has a mode field diameter (MFD) in the range of 8.7 µm to 9.5 µm at a wavelength of 1310 nm and a micro bend loss, measured using the Wire Mesh Method in IEC 62221, is less than or equal to 0.5 dB at 1550 nm.

In another embodiment of the disclosure, the micro bend loss of the multicore fiber (200) is in the range of 0.03 dB to 0.4 dB at 1550 nm. The optical fiber (100) has a Zero Dispersion Wavelength (ZDW) of less than or equal to 1330 nm, and a cable cut-off wavelength of less than or equal to 1260 nm.

Fig. 10 illustrates multicore optical fiber (200) comprising plurality of core region (102), the first trench region (inner cladding region) (104) surrounding each core region of the plurality of core region (102), the cladding region (108), the primary coating layer (110) and the secondary coating layer (112).

In accordance with an embodiment of the present disclosure, the multicore optical fiber (200)is depicted, where multiple core regions are formed within the glass cladding. For example, the multicore optical fiber (200) may contain four core regions (102), each surrounded by a trench region (104),which is also part of the inner cladding. Both the core regions (102)and their surrounding trench regions (104)are formed in a single step during the manufacturing of the core glass preform. This simplifies the production process while ensuring that the core regions (102) are effectively isolated from each other by the trench regions (104), which play a crucial role in preventing crosstalk and improving the optical performance of the multicore optical fiber (200).

In accordance with an embodiment of the present disclosure, the trench regions (104), surrounding each core region (102), provides optical isolation, ensuring that light remains confined to its respective core region (102) and does not leak into adjacent core regions (102). This configuration is vital for multicore optical fiber (200), where multiple independent optical channels are needed within the same multicore optical fiber (200). Further, the trench regions (104) can be placed anywhere in the glass cladding region (108), enhancing the design flexibility of the multicore optical fiber (200). This flexibility allows the multicore optical fiber (200) to be adapted for various applications, including high-density optical communication systems, where minimizing interference between cores is critical.

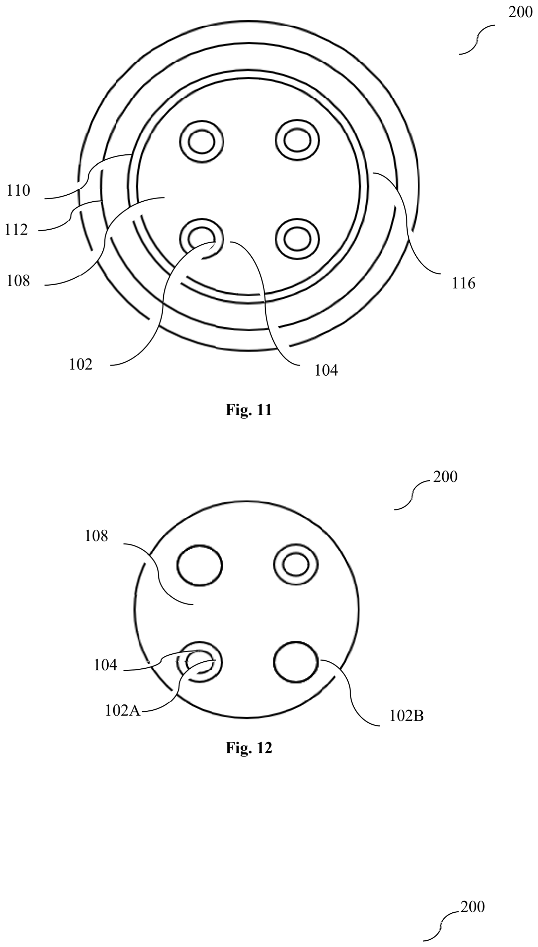

Fig. 11 illustrates another embodiment of the multicore optical fiber (200) comprising the plurality of core region (102), the first trench region (inner cladding region) (104) surrounding each core region of the plurality of core region (102), the cladding region (108), the primary coating layer (110) and the secondary coating layer (112) and the peripheral down doped region (116).

The multicore optical fiber (200) design incorporates a peripheral down-doped region (116) in the glass cladding region (108). This down-doping process reduces the refractive index of the glass cladding region (108) at the outer periphery of the multicore optical fiber (200). The purpose of this region is twofold: first, it helps to improve the light confinement within the core regions (102) and the trench regions (104), reducing leakage loss. Further, it increases the mechanical strength of the glass cladding region (108). By adjusting the refractive index profile in this way, the multicore optical fiber (200) is better able to withstand physical stresses and environmental conditions without compromising its optical performance.

The primary coating layer (110)and secondary coating layer (112), shown in both Fig. 10 and 11, provide additional protection to the multicore optical fiber (200). These coatings protect the delicate glass region of the multicore optical fiber (200)from mechanical damage, environmental influences, and potential external forces. The primary coating layer (110) typically provides a basic level of protection, while the secondary coating layer (112) offers further durability and ensures the fiber's long-term stability in practical applications.

Moreover, the multicore optical fiber (200) illustrated in Fig. 10 and 11features a combination of the core regions (102),the trench regions (104), and the cladding regions (108) designed to minimize crosstalk and enhance signal integrity. Further, the down-doped peripheral region (116) adds strength and reduces leakage loss, while the coating layers (110 and 112) provide protection to the multicore optical fiber (200). These design elements together make the multicore optical fiber(200) suitable for high-performance applications requiring high-density data transmission with minimal interference between cores.

Fig. 12 illustrates multicore optical fiber (200) a trenched core region (102A), a non-trenched core region (102B), a plurality of trench region (104) surrounding the core region (102A), and the cladding region (108). In particular, the core regions (102) of the fiber are divided into two types: trenched core regions (102A)and non-trenched core regions (102B). The trenched core regions (102A) are surrounded by the trench region (104), which serves as a critical barrier that isolates each core region (102) from its neighboring core regions (102). Further, the trench regions (104) helps to prevent crosstalk, which is the unwanted transfer of light signals between cores, by limiting the amount of light that escapes from one core and leaks into another. Even when the distance, or pitch, between the centers of adjacent cores is small, the trench ensures that light from each core remains confined to its designated path. The cladding region (108), which surrounds both the core regions (102) and the trench regions (104), provides an additional layer of protection.

In accordance with an embodiment of the present disclosure, the cladding region (108) has a lower refractive index than the core region (102), ensuring that the light is kept within the core regions (102) through the principle of total internal reflection. This helps maintain signal integrity by preventing light from escaping into the surrounding environment. Further, the cladding region (108) also shields the inner components from external stress, temperature variations, and other environmental factors, contributing to the fiber's overall durability and performance. By incorporating trench regions (104)around the core regions (102), the multicore optical fiber (200) significantly reduces crosstalk, making it possible to have multiple independent channels for optical signal transmission without interference. This is especially useful in high-capacity communication systems where multiple signals need to be transmitted simultaneously through the same fiber. The trench regions (104) create an effective optical isolation between the cores, ensuring that each core operates independently and without disrupting the others.

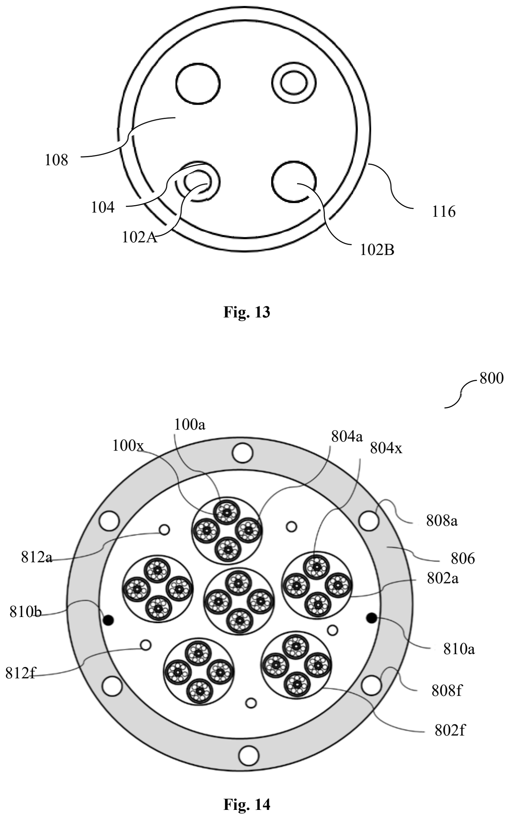

Fig. 13 illustrates multicore optical fiber (200) having one or more trenched core region (102A), one or more non-trenched core region (102B), one or more trench region (104) surrounding each trenched core regions (102A), the cladding region (108) and the peripheral down doped region (116). Fig. 13 is the alternative trench multicore fiber (200) that introduces an additional modification to the basic design seen in Fig. 12. Specifically, the adjacent trench (104) surrounding the core region (102B) in this alternative arrangement allows for effective control of crosstalk between the core regions (102), similar to the trench region (104) in Fig. 12 helps isolate the core regions (102) from each other. The presence of the adjacent trench (104) makes this type of multicore fiber (200) highly efficient in managing multiple channels of light transmission. Even when the core regions (102) are placed closely together (multicore fiber having high core density where pitch is less than 25 µm), the trench regions (102A) ensure that the light from each core does not interfere with neighboring cores, which is a common problem in densely packed fiber designs.

An additional feature in the alternative trench multicore fiber, as shown in Fig. 13, is the peripheral trench region (116) in the glass cladding (108). This peripheral trench region (116) is located on the outer edge of the cladding layer, and its thickness is typically less than 6 µm. The purpose of this peripheral trench region (116) is twofold: it helps to reduce leakage loss and increase the glass strength of the cladding. The reduced leakage loss is achieved by modifying the refractive index profile of the cladding and ensuring that the light is more effectively confined within the core and trench regions, even in regions closer to the cladding. The smaller trench helps maintain total internal reflection within the fiber, minimizing the amount of light that escapes from the core and cladding and therefore enhancing the fiber's transmission efficiency.

Further, the peripheral trench region serves to increase the glass strength of the fiber. The trench at the outer periphery of the cladding modifies the structural properties of the cladding, making the fiber more resistant to physical stresses. This is particularly important in environments where the fiber may be exposed to mechanical forces or vibrations, as the strengthened cladding reduces the likelihood of the fiber breaking or being damaged. In an embodiment of the disclosure, the multicore optical fiber (200) comprising more than one low RI region such that at least one low RI region have stepped-shape RI profile, when a glass diameter of the optical fiber is less than or equal to 80µm.

Fig. 14 illustrates an optical fiber cable (800). The optical fiber cable (800) may be a ribbon fiber cable or an intermittent bonded ribbon (IBR) fiber cable. In particular, an attenuation of the optical fiber cable (800) may be less than 0.25 dB/km at the wavelength 1310 nm. The attenuation of the optical fiber cable (800) may be less than 0.4 dB/km at the wavelength of 1550 nm.

Further, the optical fiber cable (800) may have a plurality of buffer tubes (802). Although Fig.14 illustrates that the plurality of buffer tubes (802) has six buffer tubes (i.e., first through sixth buffer tube (802a-802f), it will be apparent to a person skilled in the art that the scope of the present disclosure is not limited to it. In various other aspects, the plurality of buffer tubes (802) may have any number of buffer tubes, without deviating from the scope of the present disclosure. In such a scenario, each buffer tube of the plurality of buffer tubes (802) may be structurally and functionally similar to the first through sixth buffer tubes (802a-802f) as described herein.

The plurality of buffer tubes (802) may have a plurality of optical fiber ribbons (804) (hereinafter interchangeably referred to and designated as "plurality of IBRs" (804). Fig. 14 illustrates the plurality of buffer tubes (802) has the plurality of IBRs. In an exemplary embodiment the plurality of IBRs may be twenty-four (i.e., first through twenty fourth IBR 804a-804x). The plurality of buffer tubes (802) may have any number of IBRs. Each IBR of the plurality of IBRs (804) may be structurally and functionally similar to the first through twenty fourth IBR (804a-804x). In particular, each buffer tube of the plurality of buffer tubes (802) has four IBRS (804a-802d). Each IBR (802) may have a plurality of optical fibers (100) and/or a plurality of multicore optical fiber (200). Further, each optical fiber of the plurality of optical fibers (100, 200) may have one or more structural and functional properties same as the optical fiber (100, 200).

In accordance with an embodiment of the present disclosure, the optical fiber cable (800) has a sheath (806) that surrounds the plurality of buffer tubes (802). Specifically, the sheath (806) is adapted to act as an outermost covering for the optical fiber cable (800). The sheath (806) facilitates reduction of abrasion and provides the optical fiber cable (100) with extra protection against external mechanical effects such as crushing.

In accordance with an embodiment of the present disclosure, the sheath (806) may be made up of a material such as, but not limited to, a synthetic plastic material, a natural plastic material, and the like.

Further, the sheath (806) has a plurality of strength members (808) that are partially or completely embedded in the sheath (806). Specifically, the plurality of strength members (808) is adapted to provide strength to the optical fiber cable (800) that may be required during an installation process of the optical fiber cable (800). Furthermore, the strength members (808)are adapted to provide the majority of structural strength and support to the optical fiber cable (800). Furthermore, the strength members (808) may enhance the tensile strength of the optical fiber cable (800), which is highly desirable during the installation process. Additionally, Fig. 14 illustrates the plurality of strength members (808) has six strength members (808a-808f).In one aspect of the disclosure, each strength member of the plurality of strength members (808) may be structurally and functionally similar to the first through sixth strength members (808a-808f) as described herein.

In accordance with an embodiment of the present disclosure, the optical fiber cable (800) has one or more ripcords (810). The one or more ripcords (810) facilitates ripping, tearing, or opening up of the optical fiber cable (800). Further, the one or more ripcords (810) may facilitate the ripping, tearing, or opening up of the optical fiber cable (800) to access the plurality of strength members (808) from the sheath (806). Fig. 14, illustrates that the one or more ripcords (810) has one or more ripcords (810a and 810b).

In accordance with an embodiment of the present disclosure, the one or more ripcords (810) may have any number of ripcords. In such a scenario, each ripcord of the one or more ripcords (810) may be structurally and functionally similar to the first and second ripcords (810a, 810b) as described herein.

In accordance with an embodiment of the present disclosure, the optical fiber cable (800) may have a plurality of Water Swellable Yarns (WSYs) (812). In particular, the plurality of Water Swellable Yarns (812) provides water resistance to the plurality of optical fibers (100) inside the optical fiber cable (800) by restricting penetration of water inside the optical fiber cable (800). Further, the plurality WSYs (812) may have five WSYs (812a-812e) but not limited to it. Each WSY of the plurality WSYs (812) may be structurally and functionally similar to the plurality of WSYs (812a-812e) as described herein.

In accordance with an embodiment of the present disclosure, the optical fiber cable (800) comprises a plurality of optical fibers (100) and/or a plurality of optical fibers (200). The fiber density inside the optical fiber cable is ≥ 60%. Moreover, the optical fiber comprises one or more glass core regions (102) and a cladding region (108). Further, the optical fiber has (i) a mode filed diameter in a range of 8.7 µm to 9.5 µm corresponding to wavelength 1310 nm, and (ii) a micro bend loss, measured by Wire Mesh Method in IEC 62221, is less than or equal to 0.4 dB at 1550 nm.

In accordance with an embodiment of the present disclosure, the optical fiber cable comprises a plurality of intermittently bonded optical fiber ribbons (804), where each intermittently bonded optical fiber ribbon (804) comprises a plurality of optical fibers (100) positioned parallel and adjacent pair of optical fibers bonded intermittently by one or more bonded regions. However, the plurality of intermittently bonded optical fiber ribbons (804)is placed inside the optical fiber in form a one or more bundles such that one or more intermittently bonded optical fiber ribbon in each bundle are in rolled form and grouped together by one or more binding elements, wherein, the one or more bundles are placed substantially longitudinal straight such that the one or more bundles has a lay length of greater than or equal to 20000 mm.

In accordance with an embodiment of the present disclosure, the one or more bundles are placed in helically or SZ stranded form such that the one or more bundles has a lay length between 100 mm to 10000 mm. Moreover, the plurality of optical fibers has a diameter between 150 to 255 µm and the plurality of intermittently bonded optical fiber ribbons has a pitch between 150 to 255 µm. Further, the optical fiber has at least one (i) a macro bend loss of the optical fiber is less than or equal to 0.2 decibel per turn corresponding to wavelength of 1550 nm at bending radius of 7.5 mm, (ii) a macro bend loss of the optical fiber (100) is less than or equal to 0.5 decibel per turn corresponding to wavelength of 1625 nm at bending radius of 7.5 mm, (iii) a cable cut-off wavelength of less than or equal to 1260 nm, where a leakage loss of the optical fiber is less than or equal to 0.001 dB/Km at 1550 nm.

Fig. 15 illustrates a flow diagram for manufacturing of core rod from a porous core (102) soot preform, where over cladding is done on the core rod to obtain a glass preform and the glass preform is drawn to obtain the optical fiber (100). The method (900) for manufacturing a glass preform for optical fibers (100) includes the following steps.

Firstly, by providing (902) a porous core soot preform in an atmosphere containing a fluorine-containing gas and one or more carrier gases, where the porous core soot preform having a core region (102) and a portion of the cladding region (108).

Doping (904) the porous core soot preform with fluorine at a temperature ranging in 1050 °C to 1350 °C.

Consolidating (906) the doped porous soot core preform by exposing the doped porous soot core preform to an inert atmosphere at a consolidation temperature ranging from 1400° C to 1600° C, thereby forming a glass core preform having a fluorine doped region i.e., trench region (104) along its longitudinal length and the trench region (104) is obtained by fluorine doping having a relative RI difference ranging from -0.25% to -0.35% then stretching (908) the glass core preform to form one or more glass core rod, over cladding (910) the one or more glass core rod to obtain a glass preform and finally drawing (912) the glass preform to form optical fiber (100).

Further, the method facilitates in achieving the optical fiber RI profile design (300, 400, 500, 600) having no intermediate buffer region or pure silica region between the core region (102) and trench region (104).

In accordance with an embodiment of the present disclosure, there is provided a number of techniques are used for making optical fibers (modified chemical vapor deposition (MCVD), plasma chemical vapor deposition (PCVD), vapor axial deposition (VAD), etc.), one of the most common methods of making optical fibers is the outside vapor deposition (OVD) process. In the OVD process, silica and doped silica particles are pyrogenically generated in an oxygen flame. Soot preforms are formed layer-by-layer by deposition of vapors and particles on a rotating cylindrical target rod by traversing the soot-laden flame along the axis of the cylindrical target. The porous soot preform thus formed are subsequently treated with a drying agent (e.g., chlorine) for removal of water and metal impurities and are sintered into glass blanks at temperatures ranging from 1100°C to 1500°C. The sintered glass blanks are then drawn into 70µm to 125µm of optical fibers for their use in telecommunication systems.

The optical performance parameters defining the inventive fiber-specifically the co-optimized mode field diameter and micro-bend loss-are not independent variables but are intrinsically governed by the underlying waveguide geometry and refractive index distribution. The disclosed combination of a core region with specified propagation characteristics and a cladding region incorporating one or more trench structures establishes a unique optical confinement regime. Within this regime, the trench region functions not as an optional enhancement but as an integral component of the waveguide's boundary condition, directly determining the spatial extent of the fundamental mode (and thus the MFD) while simultaneously setting its susceptibility to radiative loss under transverse stress (micro-bend loss). The claimed ranges for MFD and micro-bend loss are therefore physical manifestations of this specific structural arrangement. A cladding region lacking the defined trench configuration cannot, as a matter of optical waveguide physics, produce the simultaneous combination of a large mode field diameter and the exceptionally low micro-bend sensitivity that characterizes the present invention.

In further conceptual embodiments, the present disclosure contemplates an optical system comprising the optical fiber as described herein operably coupled to at least one active optical component selected from the group consisting of: a laser transmitter, a photodiode receiver, an optical amplifier, a wavelength division multiplexer, and an optical switch. The system is characterized by a total link attenuation at 1550 nm that is at least 15% lower than a comparable system utilizing a standard G.652.D fiber under identical micro-bend inducing conditions, demonstrating the system-level advantage conferred by the fiber's low micro-bend loss property.

In another conceptual family of embodiments, the core region is specifically engineered not only by its alpha parameter and delta but also by a controlled radial distribution of germanium dopant that creates a central dip of less than 0.05% in relative refractive index difference within the innermost 1 µm of the core radius. This subtle profile modification, while maintaining the overall core alpha and Δc ranges, has been found to further suppress higher-order mode excitation during high-power transmission, reducing nonlinear effects without compromising the primary MFD or bend loss characteristics.

The disclosure further envisions a manufacturing method variation wherein the step of doping the porous core soot preform with fluorine is performed in a multi-stage temperature profile. In this process, the temperature is first maintained at a lower range of 1050°C to 1150°C for a predetermined period to achieve deep fluorine penetration, followed by a ramp to a higher range of 1250°C to 1350°C to set the final trench profile gradient (alpha). This controlled two-stage doping process allows for independent optimization of trench depth (Δt) and trench shape (alpha), providing unprecedented control over the resultant optical properties.

Another distinct conceptual embodiment relates to a cable design philosophy. An optical fiber cable is disclosed wherein a plurality of the optical fibers as described herein are embedded within a cured matrix material having a Young's modulus between 0.5 MPa and 5 MPa, the matrix material directly contacting the secondary coating of each fiber. The cable is devoid of traditional buffer tubes, and the specific combination of the fiber's coating moduli (as claimed) and the matrix modulus creates a predetermined mechanical impedance mismatch that actively reflects micro-bend inducing stresses away from the glass fiber, resulting in a cable micro-bend loss that is less than 1.5 times the bare fiber micro-bend loss, as measured per IEC 62221.

From a measurement and characterization perspective, a novel quality control method is also disclosed. The method involves measuring the spectral attenuation of a length of the optical fiber under a defined lateral pressure applied via a standardized mesh, calculating the difference in attenuation between 1550 nm and 1625 nm under said pressure (Δα₍₁₅₅₀₋₁₆₂₅₎ₘᵢ^{cro}), and correlating this differential attenuation value to the trench volume (Vₜᵣₑₙcₕ) as defined herein. A fiber is identified as conforming to the invention when the ratio (Δα₍₁₅₅₀₋₁₆₂₅₎ₘᵢ^{cro} / Vₜᵣₑₙcₕ) is less than 0.015 dB/(km·µm²). This metric provides a direct, non-destructive test for verifying the integrity of the trench structure's function.

In a further system-level embodiment, the optical fiber is deployed in a wavelength division multiplexing (WDM) system operating in the C+L band (1530 nm - 1625 nm). The fiber's combination of low micro-bend loss and controlled chromatic dispersion profile, stemming from the claimed core and trench parameters, results in a maximum differential channel attenuation of less than 0.8 dB across the entire band when the fiber is subjected to a bend radius of 15 mm, a performance parameter critical for modem high-channel-count systems but not achievable with prior art bend-insensitive fibers of similar MFD.

Finally, the disclosure contemplates a preform design concept. A glass preform for drawing the optical fiber is described, wherein the preform includes a consolidated core region and a fluorine-doped trench region, and is further characterized by a fluorine concentration gradient in the trench region that, when plotted against normalized radial position, has an inflection point at a radial position corresponding to between 40% and 60% of the trench thickness measured from the core-trench interface. The presence and position of this inflection point in the preform are predictive of the drawn fiber's trench alpha parameter falling within the claimed range of 2 to 5, providing a novel manufacturability control point.

The optical fiber of the present disclosure achieves a synergistic technical effect by resolving the long-standing trade-off in the art between a large Mode Field Diameter (MFD) for low splice loss and low micro-bend sensitivity for high-density cabling. Contrary to conventional understanding, the specific combination of (i) a core region configured to provide an MFD in the range of 8.7 µm to 9.5 µm at 1310 nm, with (ii) a cladding region comprising at least one trench having a relative refractive index difference (Δt) in the narrow range of -0.25% to -0.35% and a radial thickness of 9 µm to 12 µm, results in an optical fiber that simultaneously exhibits exceptionally low micro-bend loss (≤ 0.4 dB at 1550 nm) while maintaining G.657-compliant macro-bend performance. This is particularly unexpected because prior art fibers with similarly large MFDs typically exhibit significantly higher micro-bend loss, especially under the mechanical stresses inherent in high-density cable environments. The inventors have discovered that this specific trench profile, when precisely tuned within the claimed ranges and positioned in immediate adjacency to the core, creates an optimal waveguide structure that tightly confines the fundamental mode despite the large MFD, thereby decoupling micro-bend sensitivity from MFD.

While various aspects of the present disclosure have been illustrated and described, it will be clear that the present disclosure is not limited to these aspects only. Numerous modifications, changes, variations, substitutions, and equivalents will be apparent to those skilled in the art, without departing from the spirit and scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements.

## Claims

1. An optical fiber (100, 200) **characterized in that**:
one or more glass core regions (102) defined by a refractive index profile;
a cladding region (108) surrounding the one or more glass core regions (102), wherein the cladding region (108) has a refractive index lower than that of the core region (102);
one or more coating layers encapsulating the cladding region, wherein the optical fiber (100) has:
(i) a mode field diameter in the range of 8.7 µm to 9.5 µm at a wavelength of 1310 nm; and
(ii) a micro bend loss, measured using the Wire Mesh Method in IEC 62221, is less than or equal to 0.4 dB at 1550 nm.

2. The optical fiber (100, 200) according to claim 1, wherein the one or more trench regions (104) have a trench relative refractive index difference (Δt) in the range of -0.25% to - 0.35%.
The optical fiber (100, 200) according to claim 1, wherein the one or more trench regions (104) have a radial thickness in the range of 9 µm to 12 µm.

3. The optical fiber (100, 200) according to any one of claims 1, wherein a macro bend loss of the optical fiber (100, 200) is less than or equal to 0.2 dB per turn at a wavelength of 1550 nm and a bending radius of 7.5 mm.

4. The optical fiber (100, 200) according to any one of claims 1, wherein a macro bend loss of the optical fiber (100, 200) is less than or equal to 0.5 dB per turn at a wavelength of 1625 nm and a bending radius of 7.5 mm.

5. The optical fiber (100, 200) according to any one of claims 1, wherein a leakage loss of the optical fiber (100, 200) is less than or equal to 0.001 dB/km at a wavelength of 1550 nm.

6. The optical fiber (100, 200) according to any one of claims 1, wherein the one or more trench regions (104) are **characterized by** a trench alpha parameter in the range of 2 to 5, such that the relative refractive index difference in the trench region varies gradually with radial distance.

7. The optical fiber (100, 200) according to any one of claims 1, wherein the one or more glass core regions (102) are **characterized by** a core alpha parameter in the range of 5 to 8.

8. The optical fiber (100, 200) according to any one of claims 1, wherein the one or more glass core regions (102) have a core relative refractive index difference (Δc) in the range of 0.45% to 0.6% and a core radius in the range of 4.2 µm to 5.5 µm.

9. The optical fiber (100, 200) according to any one of claims 1, wherein the cladding region (108) has an outer diameter in the range of 70 µm to 110 µm.

10. The optical fiber (100, 200) according to claim 1, wherein the cladding region (108) has an outer diameter in the range of 70 µm to 90 µm and comprises a peripheral low-refractive index region (116) such that an outermost edge of the glass cladding region (108) is down-doped.

11. The optical fiber (100, 200) as claimed in claim 10, wherein the one or more trench regions (104) is defined by a trench alpha between 2 to 5, where a relative RI difference value in the trench region varies gradually.

12. The optical fiber (100, 200) according to any one of claims 1 to 11, wherein the one or more coating layers comprise a primary coating layer (110) having a Young's modulus in the range of 0.1 MPa to 0.35 MPa; and a secondary coating layer (112) having a Young's modulus in the range of 1.1 GPa to 1.5 GPa.

13. An optical fiber cable (800) or an optical fiber ribbon (804) comprises a plurality of optical fibers (100, 200) as claimed in any of the above claims.

14. An optical fiber ribbon (804) comprising a plurality of optical fibers (100, 200) according to any one of the above claims, wherein the optical fibers are positioned parallel to one another and adjacent pairs of optical fibers are bonded together at intermittent bonded regions.

15. A method (900) for manufacturing an optical fiber preform for producing an optical fiber (100, 200) according to any one of claims 1 to 12, **characterized in that** steps of:
providing (902) a porous core soot preform in an atmosphere containing a fluorine-containing gas and one or more carrier gases, the porous core soot preform comprising a core region (102) and a portion of a cladding region (108);
doping (904) the porous core soot preform with fluorine at a temperature in the range of 1050°C to 1350°C;
consolidating (906) the doped porous core soot preform by exposing it to an inert atmosphere at a consolidation temperature in the range of 1400°C to 1600°C, thereby forming a glass core preform having a fluorine-doped region defining a trench region (104) extending along a longitudinal length of the glass core preform, wherein the trench region (104) has a relative refractive index difference (Δt) in the range of -0.25% to -0.35%.
